# EUROPEAN PATENT APPLICATION

(11) **EP 1 780 650 A2**
(43) Date of publication of application: **02.05.2007**
(21) Application number: 06255554.5
(22) Date of filing: 27.10.2006
(51) Int. Cl.: G06F 17/30

(54) **Aggregate file containing a content-description file and a resource file**

(30) Priority: 28.10.2005 US 262138
(71) Applicant: ADOBE SYSTEMS INCORPORATED, San Jose, California 95110 (US)
(72) Inventor: King, James C., Santa Cruz, CA 95062 (US); Brown, Donald P., Bothell, WA 98021 (US); Switzer, Stanley J., Los Gatos, CA 95030 (US)
(74) Representative: Meldrum, David James

(57) **Abstract**

Methods, systems, and products for including a content-description file in a viewable aggregate file. A content-description file that has a first native file format and a second file that has a second native file format are identified and are inserted into an aggregate file in a form that preserves the first and second native file formats. The content-description file and the second file are extractable from the aggregate file in their respective native file formats. The content-description file is extractable without processing any part of the second file, and the second file is extractable without processing any part of the content-description file. An indication is provided for the aggregate file that indicates a default behavior for when the aggregate file is opened for viewing.

## Description

### BACKGROUND

The present disclosure relates to the creation of electronic document files that are containers for other files.

A stand-alone file is a collection of bytes that is stored as a unit in a file system. A stand-alone file typically is structured according to a native file format that dictates how the bytes in the collection are ordered and assigns special meaning to certain bytes (e.g., bytes in a file header containing information about the remaining bytes in the file). A file format typically has one or more file-name extensions associated with it (*e.g.*, jpg, .html, .xml, .zip, .pdf) that allow an operating system to associate a stand-alone file having the file format as its native file format with an application program that can interpret the file format and access data stored in the collection of bytes.

The Portable Document Format (PDF) is a file format developed by Adobe Systems Incorporated that is used to represent documents. A PDF file can describe a document that has one or more pages that include any combination of text, raster images, and vector graphics. A PDF file stores layout information for the text, images, and graphics and can also store resources such as fonts and colorspaces that are necessary to reproduce the document. PDF files can include links (*e.g.,* hyperlinks) that a viewer of the document can follow to link to related material.

A PDF file is formed from "objects," each of which has a number and a revision level. The objects can refer to each other by their object numbers. Objects can generally be stored in a PDF file in any order. A metadata index of object numbers is included in a PDF file and indicates where each object is located using a byte offset from the beginning of the PDF file.

A PDF file can include stream objects that allow arbitrary bytes of data to be stored within the PDF file. For example, text strings, images, and fonts are represented as streams of bytes using stream objects. When a PDF file is created, bytes for a PDF stream object can be taken verbatim from a stand-alone file having as its native file format one of a subset of file formats. For example, a JPEG-compressed image can be taken byte-for-byte from a stand-alone .jpg file and be placed in a PDF stream object, and a filter will decode the image when the PDF file is displayed. Fonts, sound data, ICC color profiles, and JavaScript programs also can be placed in a PDF file as stream objects that contain bytes which are also found in a corresponding stand-alone file. A PDF file that includes content in a stream of bytes also includes information about how the content in the stream of bytes should be displayed when the PDF file is opened. The display information for the content is associated with, but not included in, the stream of bytes.

Another document format is the Multipurpose Internet Mail Extensions (MIME) format, which typically is used to transmit e-mail messages. MIME provides a way to transmit text, graphics, and other binary data in e-mail messages using the Simple Mail Transfer Protocol (SMTP), which only supports transmitting 7-bit characters. A stand-alone file can be inserted into a MIME-encoded message, and the file's native file format will be preserved in the message. MIME-encoded messages are not randomly accessible, so when multiple files are included in a MIME-encoded message, other files in the message must be processed to find a file stored in the middle of the message.

### SUMMARY

This specification describes processes, systems, and products for inserting multiple stand- alone files into an aggregate file.

Aspects of the invention are defmed in the accompanying claims.

In one aspect, the invention features a method that includes identifying a content-description file that has a first native file format. The content-description file includes a reference to a first resource to be used when rendering the content-description file, where the first resource is external to the content-description file. A resource file is identified that contains the first resource. The resource file has a second native file format, and the second native file format is different from the first native file format. The content-description file and the resource file are inserted into an aggregate file in a form that preserves the first and second native file formats so that the content-description file and the resource file are extractable from the aggregate file in their respective native file formats. The content-description file is extractable without processing any part of the resource file, and the resource file is extractable without processing any part of the content-description file. An indication is provided for the aggregate file that indicates that when the aggregate file is opened for viewing, a default behavior is to display the content-description file.

Particular implementations can include one or more of the following features. Metadata is provided for the aggregate file that specifies where in the aggregate file the content-description file and the resource file are located. The metadata is located at a pre-defined location in the aggregate file and is accessible without processing any part of the content-description file or the resource file. An additional content-description file is inserted into the aggregate file, and metadata is provided for the aggregate file that specifies an order in which the content-description file and the additional content-description file are to be displayed. All resources that are necessary to render the content-description file are inserted into the aggregate file. A link is inserted into the aggregate file to an external resource that is not included in the aggregate file and is necessary to render the content-description file. The first native file format is an HTML format, and the aggregate file has a ZIP file format. The content-description file includes a URL reference to the resource file. An absolute URL reference to an external content-description file that is external to the aggregate file is detected in the content-description file. The external content-description file is inserted into the aggregate file, and the absolute URL reference is changed into a relative URL reference. The resource file is an image file, a font file, or a color-space description file.

In another aspect, the invention features a method that includes identifying a first content-description file that has a first native file format and a second content-description file that has a second native file format. The first and second content-description files are inserted into an aggregate file in a form that preserves the first and second native file formats so that the first and second content-description files are extractable from the aggregate file in their respective native file formats. The first content-description file is extractable without processing any part of the second content-description file, and the second content-description file is extractable without processing any part of the first content-description file. A display indication is provided for the aggregate file, where the display indication specifies a default content-description file whose contents should be displayed first by default when the aggregate file is opened for viewing. The default content-description file is either the first content-description file or the second content-description file.

Particular implementations can include one or more of the following features. Metadata is provided for the aggregate file that specifies where in the aggregate file the first content-description file and the second content-description file are located. The metadata is located at a pre-defined location in the aggregate file and is accessible without processing any part of the first or second content-description files. A third content-description file is inserted into the aggregate file, and metadata is provided for the aggregate file that specifies an order in which the second and third content-description files are to be displayed, where the first content-description file is the default content-description file. The first and second native file formats are a PDF format, and the aggregate file has a ZIP file format. Inserting the first and second content-description files into the aggregate file includes detecting in the first content-description file an absolute URL reference to the second content-description file and changing the absolute URL reference into a relative URL reference. An absolute URL reference to an external content-description file that is external to the aggregate file is detected in the first content-description file. The external content-description file is inserted into the aggregate file, and the absolute URL reference is changed into a relative URL reference.

In yet another aspect, the invention features a method that includes receiving an aggregate file that contains a content-description file and a resource file. The content-description file has a first native file format and includes a reference to a resource to be used when rendering the content-description file. The resource is external to the content-description file and is included in the resource file. The resource file has a second native file format, where the second native file format is different from the first native file format. The content-description file and the resource file are stored in the aggregate file in a form that preserves the first and second native file formats, and the content-description file and the resource file can be extracted from the aggregate file in their respective native file formats. The content-description file is extractable without processing any part of the resource file, and the resource file is extractable without processing any part of the content-description file. The aggregate file includes an indication that when the aggregate file is opened for viewing, a default behavior is to display the content-description file. The aggregate file is opened for viewing, and the content-description file and the resource file are read. The content-description file is rendered automatically, responsive to the indication, using the resource from the resource file.

In yet another aspect, the invention features a method that includes receiving an aggregate file containing a first content-description file that has a first native file format and a second content-description file that has a second native file format. The first and second content-description files are stored in a form that preserves the first and second native file formats, and the first and second content-description files can be extracted from the aggregate file in their respective native file formats. The first content-description file is extractable without processing any part of the second content-description file, and the second content-description file is extractable without processing any part of the first content-description file. The aggregate file includes a display indication, where the display indication specifies a default content-description file whose contents should be displayed first by default when the aggregate file is opened for viewing. The default content-description file is either the first content-description file or the second content-description file. The aggregate file is opened for viewing, and the default content-description file is read. The default content-description file is displayed before any other content-description file responsive to the display indication.

These general and specific aspects may be implemented using a computer program product, a method, a system, or any combination of computer program products, methods, and systems.

Particular embodiments of the invention can be implemented to realize one or more of the following advantages. A document that includes multiple content-description files and associated resource files is easy to transport. Industry-standard file formats are used for content-description, resource, and aggregate files. Files included within an aggregate file are randomly accessible and can be extracted into stand-alone files. Resources in the aggregate file are easy to locate and update. The aggregate file is platform-independent.

The details of one or more embodiments of the invention are set forth in the accompanying drawings and the description below. Other features, aspects, and advantages of the invention will become apparent from the description, the drawings, and the claims.

### BRIEF DESCRIPTION OF THE DRAWINGS

FIG. 1 is a flowchart of a process for modifying or creating an aggregate file.
FIG. 2 is a flowchart of a process for displaying an aggregate file.
FIG. 3A is a block diagram of stand-alone files.
FIG. 3B is a block diagram of an aggregate file.
FIG. 4 is a block diagram of an aggregate file.
FIG. 5A is a block diagram of stand-alone files.
FIG. 5B is a block diagram of an aggregate file and a stand-alone file.

Like reference numbers and designations in the various drawings indicate like elements.

### DETAILED DESCRIPTION

Text and resources for some documents are distributed among multiple stand-alone files. For example, a document on the World Wide Web can be distributed among multiple Hypertext Markup Language (HTML) files and resource files. This specification describes a process that inserts some or all of the stand-alone files associated with the document into a single viewable aggregate file, and the files that result from such a process. The aggregate file allows the document to be transported (e.g., sent as an attachment to an e-mail message) and viewed easily.

An aggregate file includes one or more content-description files (e.g., PDF, HTML, PostScript, or Scalable Vector Graphics (SVG) files). Each content-description file has an associated native file format and can be extracted into a stand-alone file. A content-description file includes content (e.g., text or graphics) and a description of how the content should be displayed. One or more resources are required to render (generate a pixel-level representation of) the content-description file correctly for display. The required resources are indicated in the content-description file by a reference such as a resource name *(e.g.,* a font name) or a link to the resource *(e.g.,* a Uniform Resource Locator (URL) specifying the location of a file that contains the resource). Content-description files in some formats, such as PDF, include the necessary resources in the content-description file itself. Other content-description file formats, such as HTML, typically include references to external resources stored in one or more stand-alone resource files that have native file formats which are different than the content-description file's native file format. A content-description file can include information about the placement of text or resources on a screen when the content-description file is rendered for display. Content-description files may include multiple pages and are not limited to being formatted for letter-size pages. When a content-description file includes multiple pages, the pages have an ordering that is explicitly or implicitly defined in the content-description file.

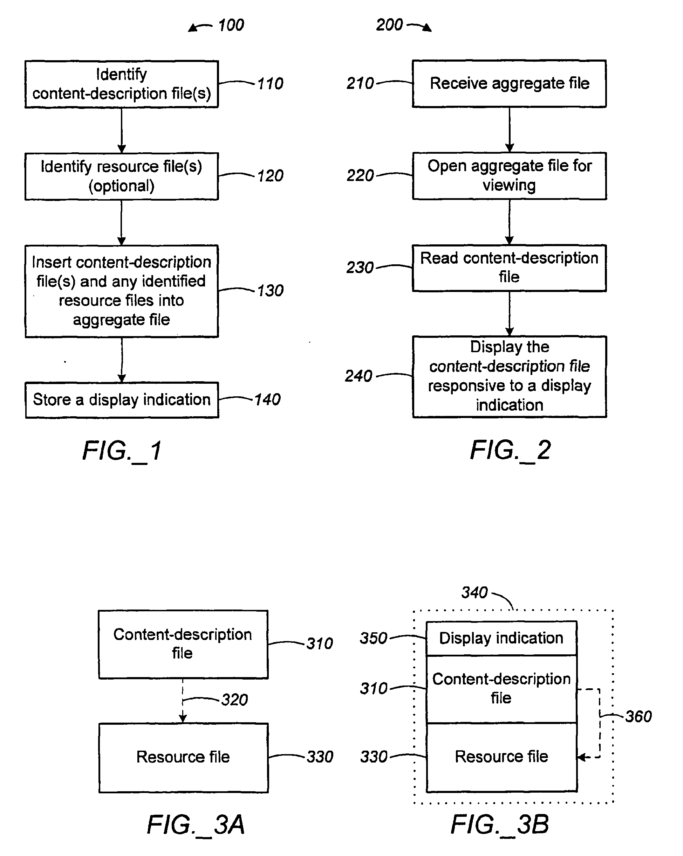

As shown in FIG. 1, a process 100 creates or modifies an aggregate file. One or more content-description files are identified (step 110) that are to be added to the aggregate file. A user can identify individual content-description files from a list or in a file browser. Alternatively, the process 100 can identify the content-description files, for example, by beginning with a user-selected single content-description file and following links to identify additional content-description files that are linked to directly or indirectly from the single content-description file. A user can specify a maximum depth to which links should be followed when identifying additional content-description files (e.g., include only content-description files that can be reached from the single content-description file by following three or fewer links) or a maximum number of content-description files that the process 100 should identify. One or more resource files optionally are identified (step 120) that are to be added to the aggregate file. For example, the process 100 can identify the resource files in which the resources are located that are necessary to render the identified content-description files correctly. A user can specify a maximum depth to which links should be followed when identifying resource files and a maximum number of resource files or a maximum number of total files that the process 100 should identify. The identified content-description files and any identified resource files are inserted into an aggregate file (step 130). A display indication also is stored (step 140) that indicates a default behavior that is intended to occur when the aggregate file is opened for viewing.

The aggregate file is a stand-alone file that has a native file format different from the respective native file formats of the content-description files or the resource files. In one implementation, the native file format of the aggregate file is the ZIP file format. The ZIP file format is described generally, for example, in the application note available at *www.pkware.com*/*business_and_developers*/*developer*/*appnotel.* The display indication that is included in the aggregate file differentiates the aggregate file from a conventional ZIP archive. The display indication signifies to an application program or application-program plug-in that opens the aggregate file for viewing that the default behavior upon opening the aggregate file for viewing is to display a content-description file that is included in the aggregate file. Opening the aggregate file for viewing means opening the aggregate file to display file content, which comes from a content-description file in the aggregate file. Opening an aggregate file for viewing does not mean merely viewing a list of names of the files included in the aggregate file. The aggregate file can, however, be opened to view a list of the contents of the aggregate file, instead of opening the aggregate file for viewing. For example, a conventional application for opening and extracting files from ZIP files can view a list of the contents of the aggregate file and extract content-description and resource files from the aggregate file. However, a conventional application for opening ZIP files cannot open aggregate files for viewing as described in this specification.

The content-description files and resource files that are included in the aggregate file are stored in the aggregate file such that the native file format of each respective file is preserved. That is, all of the bytes that were present in the stand-alone version of a content-description or resource file are recoverable from the aggregate file, although they can be stored in the aggregate file in an encrypted or compressed form. Each content-description file and resource file included in the aggregate file can be extracted from the aggregate file and stored as a stand-alone file that is byte-wise identical to the stand-alone file that was inserted into the aggregate file. The aggregate file can also include additional files that are not content-description files or resource files.

The aggregate file is randomly accessible. That is, a content-description or resource file can be accessed in or extracted from the aggregate file without reading or processing any portion of other content-description or resource files that are included in the aggregate file. To allow the included files to be accessed randomly, the aggregate file includes metadata that specifies where the bytes for each included file are located in the aggregate file. This metadata can be located at a predefined location in the aggregate file (e.g., at the start, end, or specific byte offset from the start or end of the aggregate file) so that none of the content-description or resource files included in the aggregate file need to be processed to locate the metadata. The metadata can specify a byte offset relative to the start of the aggregate file where each included file begins. Alternatively, the metadata can specify where successive data blocks of the included file are to be found in the aggregate file. The metadata also can include information about each included file *(e.g.,* the name or size of each included file).

Once an aggregate file is created, files can still be added to the aggregate file, and files included in the aggregate file can be modified. When a file in the aggregate file is modified, the modified file can be stored in the same location as the unmodified file was stored, if the modified file fits. Alternatively, the modified file can be appended to the end of the aggregate file, and the bytes where the unmodified file was stored can be marked as free. As another alternative, the entire aggregate file can be rewritten with the modified file replacing the unmodified file.

When a content-description file is added to the aggregate file, references to resources and links to and from other content-description files can optionally be modified as needed. For example, absolute links (e.g., absolute URLs) can be changed to relative links *(e.g.;* relative URLs) and vice-versa. An absolute URL specifies a full path to a file and includes a domain name and protocol. A relative URL specifies only the file name and, if necessary, additional path information. The full path to the file specified in the relative URL is implied by the full path of the file in which the relative URL is located. For example, if the file "http://www.uspto.gov/main/patents.htm" included a relative URL, "/profiles/acadres.htm," the absolute URL corresponding to the relative URL would be "http://www.uspto.gov/main/profiles/acadres.htm."

If a first content-description file in the aggregate file includes an absolute link or a relative link to a second content-description file that is external to the aggregate file, the second content-description file can be added to the aggregate file and the link in the first content-description file can be updated to point to the second content-description file in the aggregate file instead of the second content-description file that is external to the aggregate file. Links between files within the aggregate file can be unique relative URLs.

If a first content-description file includes a relative link to a second content-description file and the first content-description file is added to the aggregate file while the second content-description file is not, the relative link can be, and generally would be, changed to an absolute link that identifies the location of the second content-description file.

As shown in FIG. 2, a process 200 for displaying an aggregate file includes receiving the aggregate file (step 210) and opening the aggregate file for viewing (step 220). A user can open the aggregate file for viewing by following a link to the aggregate file, by double-clicking the aggregate file in a list of files (e.g., in a file-system browser window), by dragging and dropping the aggregate file into an application program, or by selecting an "open file" menu item in an application program and choosing the aggregate file as the file to open. Alternatively, when a user selects the aggregate file in one of these ways, the user can be prompted (e.g., in a pop-up box) to choose whether the aggregate file should be opened for viewing or whether a list of the files included in the aggregate file should be displayed instead. When the aggregate file is opened for viewing, the display indication is read and a content-description file (step 230) also is read. The content-description file is displayed responsive to the display indication (step 240).

The display indication can be a specific filename extension of the aggregate file. When a program implementing the process 200 opens for viewing a file with the specific filename extension, the default behavior of the program is to display a particular content-description file first that is included in the aggregate file. The particular content-description file that is displayed by default can be the first content-description file in the aggregate file. Alternatively, the default content-description file to display first can be specified by metadata included in the aggregate file.

Alternatively, the display indication can be a file that has a native file format (e.g., XML) and is included in the aggregate file. The display indication file has a predetermined filename (e.g., "root.xml"). When the aggregate file is opened for viewing, the presence of a file that has the predetermined filename in the aggregate file indicates that the default behavior when opening the aggregate file for viewing is to display a content-description file. A display indication file can contain data that specifies which content-description file is to be displayed first by default and can contain page-order information that specifies in what order multiple content-description files are to be displayed. In one implementation, the aggregate file includes both a specific filename extension and a display indication file.

FIG. 3A shows a content-description file 310 that includes a reference 320 that points to a resource file 330. The content-description file 310 and the resource file 330 are stand-alone files, and the reference 320 indicates that the resource file 330 includes a resource that is necessary to render the content-description file 310 correctly. The resource file 330 can contain a single resource or multiple resources. When the resource file 330 contains multiple resources, the reference 320 also specifies the specific resource or resources that are required. The content-description file 310 and the resource file 330 can be located in the same directory, in different directories in a same file system, or on separate computer systems that communicate over a data communication network. The reference 320 can be a relative link that specifies the location of the resource file 330 relative to the location of the content-description file 310. Alternatively, the reference 320 can be an absolute link that specifies the location of the resource file 330 independent of the location of the content-description file 310.

FIG. 3B shows an aggregate file 340 that includes the content-description file 310 and the resource file 330. The aggregate file 340 includes a display indication 350. When the process 100 (FIG. 1) adds the content-description file 310 and the resource file 330 to the aggregate file 340, the process 100 converts the reference 320 into a relative link 360 that specifies where the resource file 330 can be found relative to the content-description file 310 in the aggregate file 340.

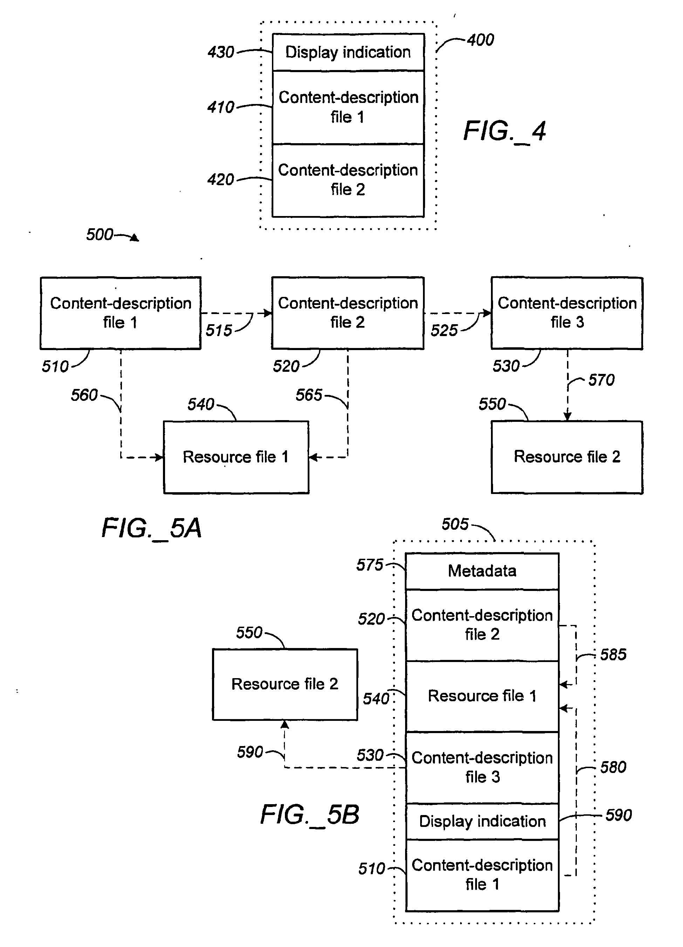

FIG. 4 shows an aggregate file 400 that includes a first content-description file 410 and a second content-description file 420. One or both of the two content-description files can include a link to the other, or the two content-description files can be independent. A display indication 430 (or associated metadata) specifies which of the two content-description files should be displayed first by default.

The display indication 430 can specify that the second content-description file 420 should be displayed first by default. Although the default behavior when opening the aggregate file 400 for viewing is to display the second content-description file 420 first, a program can open the aggregate file 400 with a specific request that the first content-description file 410 be displayed first instead. For example, a stand alone file that is external to the aggregate file 400 can include a link to the first content-description file 410, and when the link is followed, the program that opens the aggregate file 400 displays the first content-description file 410 first. Absent a specific request, however, a program opening the aggregate file 400 for viewing will display the second content-description file 420 first. If the second content-description file 420 includes multiple pages, a first page will be displayed from the second content-description file 420. After the end of the second content-description file 420 is reached *(e.g.,* by a user advancing through pages included in the second content-description file 420), the first content-description file 410 is displayed.

FIG. 5A shows a document 500 whose content and resources are spread over several stand-alone files, including a first content-description file 510. The first content-description file 510 includes a first link 515 to a second content-description file 520, which in turn includes a second link 525 to a third content-description file 530. The first content-description file 510 includes a third link 560 to a first resource file 540. The second content-description file 520 includes a fourth link 565 to the first resource file 540. The third content-description file 530 includes a fifth link 570 to a second resource file 550.

Process 100 (FIG. 1) can be applied to the document 500 to generate an aggregate file 505, shown in FIG. 5B. All of the content-description files in document 500 are included in the aggregate file 505 along with the first resource file 540. However, the second resource file 550 is not included in the aggregate file 505. Some possible reasons that the aggregate file 505 would include the files that it does when created using the process 100 include the following:
1. A user identified all of the content-description files in the document 500 (FIG. 5A) and the first resource file 540 to be included in the aggregate file 505, but did not identify the second resource file 550.
2. The user requested that the process 100 create the aggregate file 505 (FIG. 5A) from the first content-description file 510 and all content-description files and resource files that are two or fewer links away from the first content-description file 510.
3. The user requested that the process 100 create the aggregate file 505 (FIG. 5A) from the first content-description file 510 and a maximum of three files that the first content-description file 510 links to directly or indirectly.

While the second resource file 550 is external to the aggregate file 505, it typically is useful to include all of the resources in an aggregate file that are necessary to render the content-description files in the aggregate file. If a resource file is too large to include in an aggregate file, or if the necessary resource is easily accessible, an absolute link to the resource file can be included in content-description files requiring the resource, rather than including the resource file in the aggregate file. In one implementation, standard external resources can be specified in the aggregate file using a standardized naming scheme. Pools of standard resources can be included in computer systems (e.g., as part of an operating system), where the standard resources in the pools are identified by names according to the standardized naming scheme. For example, a font name can be specified in the aggregate file, and a computer system on which the aggregate file is opened for viewing can be expected to have a font by that name available within a pool of standard resources.

The aggregate file 505 also includes a display indication 590 and metadata 575. The metadata 575 includes an ordering for the content-description files included in the aggregate file 505. The display indication 590 optionally can be included in the metadata 575. The metadata 575 also can include information about the aggregate file 505 such as an author, a revision number, or a date of modification. The metadata 575 can include bookmarks pointing to pages in the content-description files, annotations for the content-description files, or information about security or encryption of the aggregate files included in the aggregate file. The metadata 575 can be stored in one or more XML files included in the aggregate file 505.

Embodiments of the invention and all of the functional operations described in this specification can be implemented in digital electronic circuitry, or in computer software, firmware, or hardware, including the structures disclosed in this specification and their structural equivalents, or in combinations of them. Embodiments of the invention can be implemented as one or more computer program products, *i.e.,* one or more modules of computer program instructions encoded on a computer-readable medium, e.g., a machine-readable storage device, a machine-readable storage medium, a memory device, or a machine-readable propagated signal, for execution by, or to control the operation of, data processing apparatus. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of them,. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio player, a Global Positioning System (GPS) receiver, to name just a few. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the invention can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

Embodiments of the invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, *e.g.,* a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

Particular embodiments of the invention have been described. Other embodiments are within the scope of the following claims. For example, the actions recited in the claims can be performed in a different order and still achieve desirable results.

## Claims

1. A computer-implemented method comprising:
identifying a content-description file having a first native file format, the content-description file including a reference to a first resource to be used when rendering the content-description file, the first resource being external to the content-description file;
identifying a resource file containing the first resource, the resource file having a second native file format, the second native file format being different from the first native file format;
inserting the content-description file and the resource file into an aggregate file in a form that preserves the first and second native file formats so that the content-description file and the resource file are extractable from the aggregate file in their respective native file formats, the content-description file being extractable without processing any part of the resource file, the resource file being extractable without processing any part of the content-description file; and
providing for the aggregate file an indication that when the aggregate file is opened for viewing, a default behavior is to display the content-description file.

2. The computer-implemented method of claim 1, further comprising:
providing for the aggregate file metadata that specifies where in the aggregate file the content-description file is located and where in the aggregate file the resource file is located, wherein the metadata is located at a pre-defined location in the aggregate file and is accessible without processing any part of the content-description file or the resource file.

3. The computer-implemented method of claim 1 or claim 2, further comprising:
inserting an additional content-description file into the aggregate file; and
providing for the aggregate file metadata that specifies an order in which the content-description file and the additional content-description file are to be displayed.

4. The computer-implemented method of any preceding claim, further comprising:
inserting into the aggregate file all resources necessary to render the content-description file.

5. The computer-implemented method of any preceding claim, further comprising:
inserting into the aggregate file a link to an external resource that is not included in the aggregate file and is necessary to render the content-description file.

6. The computer-implemented method of any preceding claim, wherein:
the first native file format is an HTML format; and
the aggregate file has a ZIP file format.

7. The computer-implemented method of any preceding claim, wherein:
the content-description file includes a URL reference to the resource file.

8. The computer-implemented method of any preceding claim, further comprising:
detecting in the content-description file an absolute URL reference to an external content-description file that is external to the aggregate file;
inserting the external content-description file into the aggregate file; and
changing the absolute URL reference into a relative URL reference.

9. The computer-implemented method of any preceding claim, wherein:
the resource file is an image file, a font file, or a color-space description file.

10. A computer program product operable to cause a data processing apparatus to perform the method of any preceding claim.

11. The computer program product of claim 10 encoded on an information carrier.

12. A data processing apparatus programmed with the computer program product of claim 10 or claim 11.

13. A computer-implemented method comprising:
receiving an aggregate file containing a content-description file and a resource file, the content-description file having a first native file format and including a reference to a resource to be used when rendering the content-description file, the resource being external to the content-description file, the resource file including the resource, the resource file having a second native file format, the second native file format being different from the first native file format, the content-description file and the resource file being stored in the aggregate file in a form that preserves the first and second native file formats so that the content-description file and the resource file can be extracted from the aggregate file in their respective native file formats, the content-description file being extractable without processing any part of the resource file, the resource file being extractable without processing any part of the content-description file, the aggregate file including an indication that when the aggregate file is opened for viewing, a default behavior is to display the content-description file;
opening the aggregate file for viewing;
reading the content-description file and the resource file; and
rendering the content-description file automatically, responsive to the indication, using the resource from the resource file.

14. A computer program product operable to cause a data processing apparatus to perform the method of claim 13.

15. The computer program product of claim 14 encoded on an information carrier.

16. A data processing apparatus programmed with the computer program product of claim 14 or claim 15.
